# FASCICULE DE BREVET EUROPEEN

(11) **EP 2 694 214 B1**
(45) Date de publication et mention de la délivrance du brevet: **01.08.2018**
(21) Numéro de dépôt: 12722754.4
(22) Date de dépôt: 06.04.2012
(51) Int. Cl.: B01L 9/00, B01L 3/00

(54) **DISPOSITIF DE CONNEXION D'UNE CARTE MICROFLUIDIQUE**
VERBINDUNGSVORRICHTUNG FÜR MIKROFLUIDISCHE KARTE
MICROFLUIDIC CARD CONNECTION DEVICE

(30) Priorité: 08.04.2011 FR 1153072
(43) Date de publication de la demande: 12.02.2014
(73) Titulaire: Commissariat à l'Énergie Atomique et aux Énergies Alternatives, 75015 Paris (FR)
(72) Inventeur: CHARLES, Raymond, F-38430 Saint Jean De Moirans (FR); POUTEAU, Patrick, F-38240 Meylan (FR)
(74) Mandataire: Ahner, Philippe
(86) Numéro de dépôt international: PCT/FR2012/050765
(87) Numéro de publication internationale: WO 2012/136943

(56) Documents cités:
- EP-A1- 2 153 892
- WO-A1-2008/049447
- DE-B3-102006 022 511
- US-A1- 2006 024 702
- US-A1- 2007 237 687

## Description

### DOMAINE TECHNIQUE

L'invention porte sur un dispositif de connexion étanche et de déconnexion d'une carte microfluidique, avec un ou plusieurs instruments, comme par exemple un appareil de mesure, un élément chauffant, un actionneur mécanique, une pompe, etc.

L'invention concerne entre autres, les domaines liés à la recherche médicale, à la biologie et à la pharmaceutique.

L'invention porte également sur un procédé de connexion et de déconnexion d'une carte microfluidique dans ledit dispositif de connexion, sans outil et sans connaissance technique particulière.

### ETAT DE LA TECHNIQUE

L'utilisation de dispositifs de diagnostic in vitro, nécessite généralement le raccord d'une carte, comprenant un circuit fluidique, à un support instrumenté. Par carte, on entend un support réalisé dans un matériau rigide, pouvant comporter un circuit fluidique. La carte peut par exemple comprendre des moyens complexes, tels qu'une biopuce, une vanne, une chambre de réaction, etc. La problématique de connexion de la carte à un support instrumenté, est bien souvent négligée. De ce fait, les techniques généralement utilisées sont délicates et fastidieuses à mettre en oeuvre, comme le montrent les exemples ci-après.

Selon une première technique de connexion et de déconnexion d'une carte à un instrument, la carte est pré-positionnée sur un support de connexion qui est relié à un ou éventuellement plusieurs instruments.

La carte microfluidique est maintenue par des brides qui maintiennent la carte contre le support.

L'étanchéité entre les entrées et les sorties fluidiques de la carte, et les entrées et les sorties du support, est obtenue par écrasement de joints disposés entre la carte microfluidique et le support. Ce type de connexion nécessite plusieurs moyens mobiles, comme par exemple des brides, des éléments de serrage des brides, des joints, des tournevis, etc. Or, ces moyens mobiles sont susceptibles d'être égarés lors de leur utilisation et de plus, ils nécessitent des manipulations délicates pour leur mise en place et/ou leur utilisation. Ces manipulations peuvent rapidement devenir fastidieuses lorsqu'elles sont souvent reproduites.

Selon une seconde technique, la carte comporte un connecteur destiné à être raccordé à une embase du support ou vice versa. La réalisation d'une telle carte est contraignante et onéreuse. Dans les deux cas, les étapes de réalisation, de connexion et de déconnexion d'une carte microfluidique à un support instrumenté sont longues et délicates.

La présente invention résout les problèmes précédents en divulguant un dispositif de connexion et de déconnexion simplifié, rapide et utilisable dans un grand nombre d'environnements différents.

Le document DE 102006022511 décrit un dispositif pour insérer une chambre de micro-réaction, de forme plane, en une ou plusieurs. Ce document divulgue se faisant l'objet du préambule de la revendication 1. Le document EP 2153892 décrit un système de microréacteur et un procédé pour le mettre en oeuvre.

Le document WO 2008/49447 décrit un support de puce, un système fluidique et un système de support de puce.

### EXPOSÉ DE L'INVENTION

L'invention concerne un dispositif d'interconnexion d'une carte, tel que défini en revendication 1.

Un moyen définissant un axe de rotation est défini, de telle sorte qu'une carte puisse basculer ou pivoter autour de cet axe pour venir en appui contre la première surface.

Un dispositif d'interconnexion selon l'invention permet de connecter ou bien de déconnecter une carte audit dispositif.

Les moyens de maintien sont aptes à maintenir la face d'appui de la carte contre la première surface du dispositif, de telle sorte que la face de connexion de la carte soit maintenue en appui contre la deuxième surface du dispositif.

L'axe de rotation peut être défini par une arête ou une portion de, ou sur, la première surface du dispositif.

De façon préférentielle, l'axe de rotation est parallèle à la deuxième surface et à la première surface du dispositif.

Un mouvement de rotation d'une carte est effectué dans un plan perpendiculaire à l'axe de rotation, pour emmener la carte en appui contre la première surface et également, de préférence simultanément, contre la deuxième surface.

Lorsque les embouchures des canaux formés dans la carte et le dispositif, et destinés à être raccordés, comportent des joints, un tel mouvement de rotation permet d'éviter une contrainte de cisaillement sur les joints lorsque la carte s'appuie contre la deuxième surface du dispositif.

Lorsque la carte est en appui contre la première surface, elle est en appui également contre la deuxième surface : la carte est alors dite connectée au dispositif, ou bien on dit qu'il y a connexion fluidique. Par connexion fluidique, on entend un contact entre deux canaux, permettant à un fluide, gazeux ou liquide, de passer d'un canal du dispositif à un canal de la carte, et éventuellement d'un canal de la carte à un canal du dispositif, la connexion étant généralement étanche.

Par un effet de bras de levier, la surface de connexion de la carte s'appuie contre la deuxième surface du dispositif, ce qui permet une connexion fluidique entre un canal de la carte, débouchant de la face de connexion, et un canal débouchant de la surface d'appui du dispositif.

Les moyens de maintien peuvent être amovibles et/ou déformables et/ou réversibles, pour permettre de connecter ou de déconnecter la carte au dispositif, sans outils et à volonté.

Les moyens de maintien peuvent exercer sur la carte, positionnée sur ladite première surface du dispositif, une force ayant une composante perpendiculaire à cette première surface. Eventuellement, les moyens de maintien peuvent exercer sur la carte, positionnée sur ladite première surface dudit dispositif, au moins une force ayant une composante parallèle à cette première surface.

Une combinaison de telles forces permet un appui optimisé de la carte contre le dispositif.

Un dispositif selon l'invention peut comporter au moins un canal fluidique débouchant de la deuxième surface du dispositif. Au moins un tube peut être placé dans un tel canal.

Un moyen d'étanchéité, par exemple un joint, peut être placé à l'embouchure d'un tel canal afin de permettre une connexion fluidique étanche avec un canal de la carte, lorsque cette dernière est maintenue contre le dispositif. Un joint peut être lui aussi placé à l'embouchure d'un canal la carte. Un mouvement de rotation autour d'un axe, comme expliqué ci-dessus, permet d'éviter tout frottement ou glissement au niveau des joints.

La carte est dite connectée lorsqu'un de ses canaux est en connexion fluidique avec un canal du dispositif. De préférence, lors de la connexion, le ou les joints sont écrasés ou légèrement écrasés entre la face de connexion de la carte et la deuxième surface, afin d'assurer l'étanchéité entre lesdits canaux. Cet écrasement est effectué selon une direction perpendiculaire à la deuxième surface (ou à la surface de connexion de la carte).

D'une manière générale, lorsque la carte est raccordée au dispositif, la face de connexion de la carte s'appuie contre la deuxième surface du dispositif. La face de connexion et la deuxième surface peuvent être en contact direct ou bien séparées par l'épaisseur d'un joint, ou de 2 joints, situé au niveau de l'embouchure du premier canal fluidique, formé dans la carte et/ou de l'embouchure du deuxième canal fluidique, formé dans le dispositif.

Un dispositif selon l'invention peut être monobloc, ses différentes parties étant fixes l'une par rapport à l'autre. En variante, il peut comporter au moins deux parties démontables et/ou au moins deux parties dont l'agencement dans l'espace, ou la position relative, est variable à l'aide de moyens de réglage.

Le dispositif d'interconnexion peut être composé de moyens pour former, au moins une troisième surface, ou surface de fond, sensiblement en regard et sensiblement parallèle à la deuxième surface et distante de celle-ci, d'une distance supérieure à la distance séparant la première surface et la deuxième surface.

Outre la connexion de canaux fluidiques, un dispositif selon l'invention peut permettre une connexion électrique et/ou optique et/ou thermique entre la carte et le dispositif. Par exemple, lorsque la connexion fluidique entre un canal de la carte et le dispositif est assurée, une connexion électrique, respectivement optique ou thermique, peut être obtenue entre des moyens électriques, respectivement optiques ou thermiques, disposés sur la carte, par exemple sur la face de connexion de la carte, et sur le dispositif, par exemple sur sa deuxième surface.

Dans un mode de réalisation préféré, la deuxième surface est située parallèlement à la première surface mais de préférence lesdites surfaces ne se surplombent pas.

La deuxième surface peut surplomber une troisième surface, ou surface de fond, parallèle à la première surface, située en dessous et distante de cette dernière. La deuxième et la troisième surface peuvent alors délimiter une zone d'insertion d'une extrémité de la carte à connecter.

Un dispositif d'interconnexion selon l'invention peut être délimité par une ou plusieurs parois, perpendiculaires à la première et la deuxième surface dudit dispositif. Par exemple, une première paroi, dite paroi arrière, peut être placée en contact avec un bord de la première surface, de préférence le bord le plus éloigné de la deuxième surface. Une seconde paroi, dite paroi avant, peut être placée en contact avec un bord de la deuxième surface, de préférence le bord le plus éloigné de la première surface. De préférence, la paroi arrière et la paroi avant sont alors en vis-à-vis et séparées d'une distance D. La surface de fond peut avoir son bord le plus éloigné de la paroi avant, d'une distance d, comprise entre D/2 et D/20.

De préférence, les extrémités les plus proches de la première surface et de la deuxième surface sont séparées d'une distance égale ou supérieure à 1,1 fois ou 1,2 fois l'épaisseur d'une carte pouvant être connectée au dispositif. Cela permet une introduction aisée de la carte dans la zone d'insertion.

Un dispositif selon l'invention peut comporter des moyens formant au moins un plot, mobile suivant une direction sensiblement perpendiculaire à la première surface et/ou à la deuxième surface. Le plot peut alors appliquer une pression, par un mouvement de translation, sur une carte connectée au dispositif. De préférence, le ou lesdits plots sont perpendiculaires et en vis-à-vis de la première surface.

L'invention concerne également un procédé de connexion d'une carte, selon la revendication 12, et un procédé de déconnexion d'une carte, selon la revendication 14, avec un dispositif selon l'invention. La carte à connecter a au moins un premier canal fluidique débouchant d'une face de connexion, par exemple une face supérieure, parallèle à une face d'appui, par exemple une surface inférieure. Le premier canal fluidique a au moins une embouchure sur ladite face de connexion de la carte. Lors de la connexion de la carte au dispositif, la face d'appui est amenée vers la première surface du dispositif. Par un effet de bras de levier, la face de connexion de la carte s'appuie alors contre la deuxième surface du dispositif, de telle sorte qu'au moins une embouchure d'un premier canal fluidique, formé dans la carte et au moins une embouchure d'un deuxième canal fluidique, formé dans le dispositif, soient en connexion fluidique.

Avec un dispositif selon l'invention, ou avec un procédé selon l'invention, la face de connexion de la carte s'appuie contre la deuxième surface du dispositif, ou le premier canal fluidique vient en connexion fluidique avec le deuxième canal fluidique, en même temps que la surface d'appui de la carte vient en contact avec la première surface du dispositif.

Le fait que la carte s'appuie contre ou s'appuie vers, une ou contre une surface, indique que la carte est maintenue plaquée vers ladite surface, mais ne suppose pas forcément un contact direct entre la carte et ladite surface.

La face de connexion de la carte et la deuxième surface du dispositif peuvent être en contact, ou bien séparées par au moins un joint assurant l'étanchéité entre les deux canaux fluidiques.

De préférence, la carte est connectée au dispositif par un procédé composé de deux mouvements qui peuvent être successifs.

Selon un mouvement de translation, la carte est insérée dans le dispositif, de sorte que la face supérieure de la carte soit sensiblement en vis-à-vis de la deuxième surface, et la face d'appui de la carte soit en contact avec un axe de rotation, qui est de préférence parallèle à la première surface du dispositif, et sensiblement en vis-à-vis de la première et/ou de la surface de fond du dispositif.

La carte pivote autour de l'axe de rotation qui est en outre, de préférence, perpendiculaire à un axe longitudinal dudit dispositif, défini ci-dessous.

Le mouvement de pivotement est réalisé jusqu'à que la carte soit connectée au dispositif.

De façon préférée, l'axe de pivotement peut correspondre à une arête formée par l'intersection de la première surface avec une surface inclinée, cette dernière reliant la première surface à la surface de fond.

De façon préférée, l'axe de pivotement est plus proche de l'axe d'un second canal, formé dans le dispositif, que du bord arrière de la première surface. Cela permet, par l'effet de bras de levier mentionné ci dessus, d'appliquer une force d'appui plus importante de la carte contre la deuxième surface lorsque les moyens de maintien agissent sur la carte de façon à ce qu'elle soit maintenue contre la première surface du dispositif. Par bord arrière de la surface, on entend le bord de cette surface le plus éloigné de la paroi avant.

Le procédé de déconnexion de la carte peut être réalisé en reproduisant les étapes précédentes dans l'ordre inverse.

Avec un tel dispositif, la connexion et/ou la déconnexion de la carte au dispositif d'interconnexion selon l'invention, peut être réalisée par un opérateur, de préférence avec une seule main.

### BRÈVE DESCRIPTION DES DESSINS

La figure 1 représente un exemple de carte microfluidique pouvant être connectée et déconnectée à un dispositif selon l'invention.
Un dispositif selon l'invention est représenté sur les figures 2 et 3, une carte étant en position de connexion en figure 3.
Les figures 4 et 5A sont des vues en perspective d'une partie d'un dispositif représenté sur les figures 2 et 3.
La figure 5B est une coupe transversale de la figure 5A.
La figure 6 est une vue en trois dimensions d'un autre exemple de dispositif composé de surfaces détachables et interchangeables,

Sur la figure 7, une partie d'un exemple de dispositif est représentée en perspective.
Les figures 8A et 8B sont des représentations d'un dispositif assemblé avec la partie représentée sur la figure 7 ; La figure 9 représente une autre partie du dispositif représenté sur les figures 7 et 8A-B.
La figure 10 illustre un assemblage d'un dispositif représenté sur les figures 7 à 9.
Les figures 11A et 11B représentent une variante d'un dispositif en trois dimensions.
Les figures 12A à 14B illustrent les étapes d'un procédé de connexion d'une carte microfluidique dans un dispositif selon l'invention.

Les parties identiques, similaires ou équivalentes des différentes figures portent les mêmes références numériques de façon à faciliter le passage d'une figure à l'autre. Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

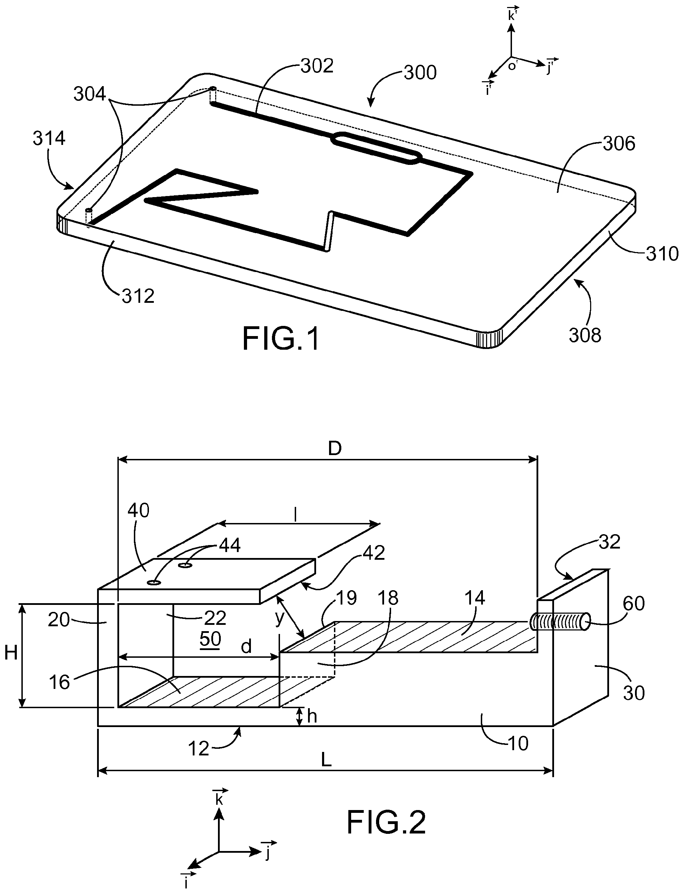

Un premier exemple de réalisation d'un dispositif de connexion d'une carte est représenté sur les figures 2-4.

Une carte 300 (ou carte fluidique ou carte microfluidique ou consommable), pouvant être connectée à un tel dispositif, est représentée sur la figure 1. La carte 300 comporte au moins un canal fluidique (ou microfluidique) 302 à sa surface, et/ou dans son épaisseur.

La carte est un support réalisé dans un matériau rigide, de préférence en un seul bloc, pouvant comporter un circuit fluidique. La carte peut par exemple comprendre des moyens complexes, tels qu'une biopuce, et/ou une vanne, et/ou une chambre de réaction, etc.

La plaque est amovible, destinée à être raccordée au dispositif de connexion, de sorte que le circuit fluidique de la carte soit raccordé au circuit fluidique du dispositif.

L'épaisseur de la carte est définie selon l'axe *̅k̅*̅' d'un repère orthogonal (O', i', j', k'), sa longueur étant selon l'axe *̅j̅*̅' et sa largeur selon l'axe *̅i̅*̅'.

De préférence, la carte a des dimensions similaires ou semblables aux dimensions d'une carte de crédit, et est suffisamment épaisse pour contenir au moins un canal fluidique, éventuellement un réseau fluidique (comportant plusieurs canaux fluidiques).

Ainsi, la longueur et la largeur de la carte peuvent respectivement être comprises entre quelques décimètres et quelques centimètres, par exemple entre 1 cm et 10 cm ou 20 cm, son épaisseur entre quelques centimètres et quelques millimètres, par exemple entre, d'une part, 1 mm ou 5 mm et, d'autre part, 1 cm ou 2 cm.

Au moins un canal fluidique 302 est relié à au moins une ouverture ou une embouchure 304 débouchant en une face 306 de la carte, qu'on appellera arbitrairement face de connexion, surface parallèle à une autre face 308, dite arbitrairement face d'appui.

L'ouverture ou les ouvertures 304 sont situées sur la partie de la face 306 de connexion, la plus proche d'une face 314, située dans un plan parallèle au plan i'k' sur la figure 1. Cette face 314 peut être appelée face avant, elle est parallèle à une autre face 310, dite face arrière de la carte.

Un film, par exemple un film en matière plastique, de préférence biocompatible, peut recouvrir au moins une embouchure 304 d'un canal fluidique 302 de la carte 300, embouchure située dans la face de connexion 306. Ce film permet de protéger une ou plusieurs embouchures 304, afin d'empêcher l'intrusion de matière dans le ou les canaux 304, avant connexion de la carte à un dispositif selon l'invention. On peut alors utiliser la carte 300 dans des environnements divers, sans conditions particulières de propreté.

Dans un mode de réalisation, un dispositif de connexion comporte, comme illustré en figure 2, une base ou semelle 10 qui comporte elle même une surface inférieure 12, ou surface d'appui de l'ensemble du dispositif, et une surface supérieure ou première surface 14, sur laquelle une carte microfluidique 300 peut venir s'appuyer lors de l'utilisation du dispositif: pour cette raison, on appellera cette surface 14, dans la suite, surface d'appui de la carte 300. Dans un repère orthogonal (O, i, j, k), représenté sur la figure 2, les surfaces 12 et 14 peuvent être sensiblement parallèles entre elles et au plan [O;*i̅;j̅*].

Selon l'axe *̅j̅*̅, le dispositif est délimité à ses extrémités par deux parois 20 et 30 (dites respectivement parois avant et arrière) disposées sensiblement perpendiculairement à chacune des surfaces 12 et 14. Les parois 20 et 30 peuvent être sensiblement rectangulaires. La surface 22 de la paroi avant 20, tournée vers l'intérieur du dispositif, peut être appelée butée avant 22. La surface 32 de la paroi arrière, adjacente de la première surface 14, peut être appelée butée arrière.

On désignera par L la longueur du dispositif selon l'axe *̅j̅*̅ et par D la distance, selon le même axe, entre la butée avant 22 et la butée arrière 32. La surface 14, surface d'appui d'une carte microfluidique, a une extension, selon l'axe j, inférieure à la longueur D. Les valeurs de D et de L sont généralement centimétriques, elles peuvent être comprises entre 1 cm et 20 cm, et le plus fréquemment entre 3 cm et 10 cm.

Dans la réalisation présentée en figure 2, la base 10 présente un profil en marche d'escalier dans le plan [O;*̅j̅*̅;*̅k̅*̅]. La marche d'escalier est définie d'une part, par la première surface 14, et, d'autre part, par une deuxième surface 16, dite surface de fond, elle aussi sensiblement rectangulaire et parallèle à chacune des surfaces 12 et 14. La première surface 14 et la surface de fond 16 sont reliées par une troisième surface 18, dite surface inclinée, orientée, dans cet exemple, sensiblement parallèlement au plan [O;*̅j̅*̅;*̅k̅*̅] et sensiblement perpendiculairement à chacune des deux surfaces 14 et 16. On explique plus loin que d'autres orientations de la surface 18 sont possibles.

Le bas de la paroi 20 est situé contre l'extrémité avant de la surface de fond 16. La butée avant 22 est en vis-à-vis de la surface inclinée 18.

La surface inclinée 18 et la butée avant 22 sont séparées d'une distance d, comprise de préférence entre la moitié et un vingtième de la distance D.

A la partie supérieure de la butée avant 22, est raccordée une paroi supérieure ou plaque latérale supérieure 40, sensiblement parallèle à la surface d'appui 12, à la première surface 14 et à la surface de fond 16.

La paroi 40 a également une largeur centimétrique, suivant l'axe *̅i̅*̅, par exemple voisine ou identique à la largeur de la paroi avant 20 et/ou de la paroi arrière 30 et à la largeur de la base 10 selon ce même axe. La paroi supérieure 40 s'étend, suivant l'axe *̅j̅*̅, sur une longueur l centimétrique, par exemple comprise entre 1 et 20 cm, de préférence entre 3 cm et 10 cm. La longueur l peut être sensiblement égale à d, ou légèrement inférieure ou légèrement supérieure à celle-ci.

Une surface 42 de la paroi 40 fait face à la surface de fond 16. Elle sera appelée deuxième surface.

De préférence, la paroi supérieure 40 ne surplombe pas la première surface 14. Les extrémités les plus proches de la deuxième surface 42 et de la première surface 14, sont éloignées d'une distance y, de préférence égale ou supérieure à 1,1 ou 1,2 fois l'épaisseur de la carte microfluidique, mesurée selon l'axe k lorsque celle-ci est placée sur la première surface 14. Cette configuration favorise une introduction de la carte microfluidique en biais, entre la deuxième surface 42 et la première surface 14.

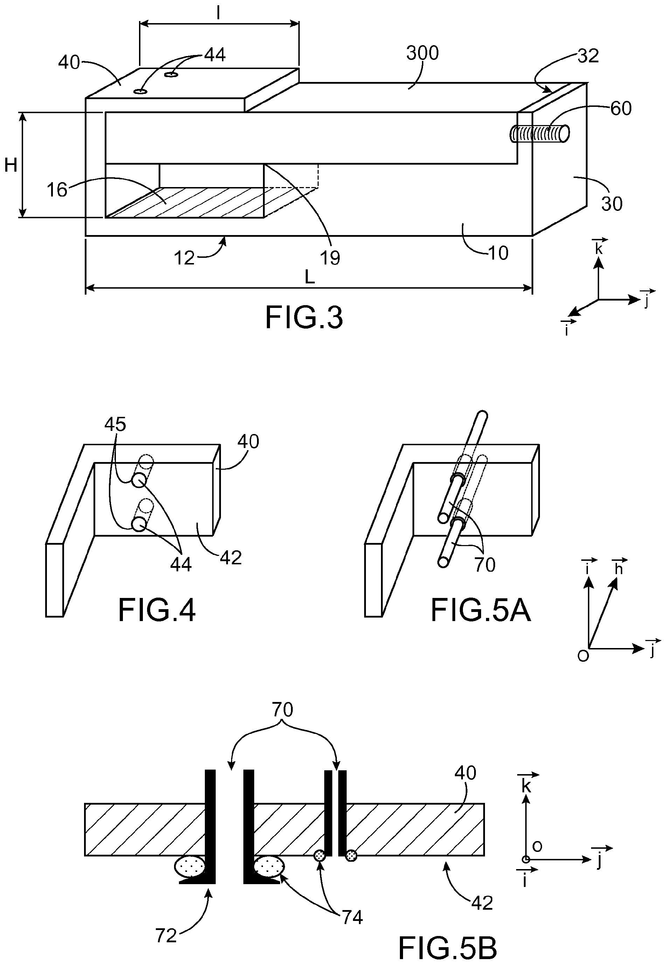

Comme on le voit en figure 2, mais aussi en figures 3-6, la paroi supérieure 40 comporte ou contient, ou est traversée par, au moins un canal 44 ayant au moins une de ses ouvertures ou embouchures 45 présente sur la deuxième surface 42.

Une ou plusieurs des secondes extrémités des canaux 44 peuvent déboucher sur une ou plusieurs surfaces du dispositif et être reliées, par exemple, à l'aide de tubes à un des instruments de traitement ou d'analyse de fluides non représentés sur les figures. Au moins l'un des canaux peut traverser la paroi 40 selon l'axe *̅k̅*̅, par exemple illustré en figures 3 - 5B.

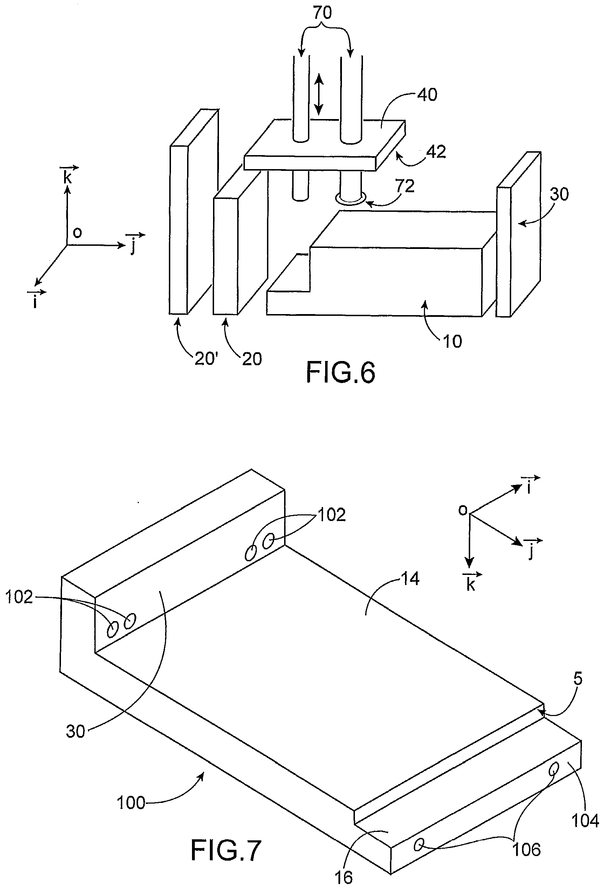

Comme représenté en figures 5A, 5B, 6, les fluides peuvent être transportés dans des tubes 70 placés dans les canaux 44 afin d'éviter tout contact entre les fluides et les parois des canaux.

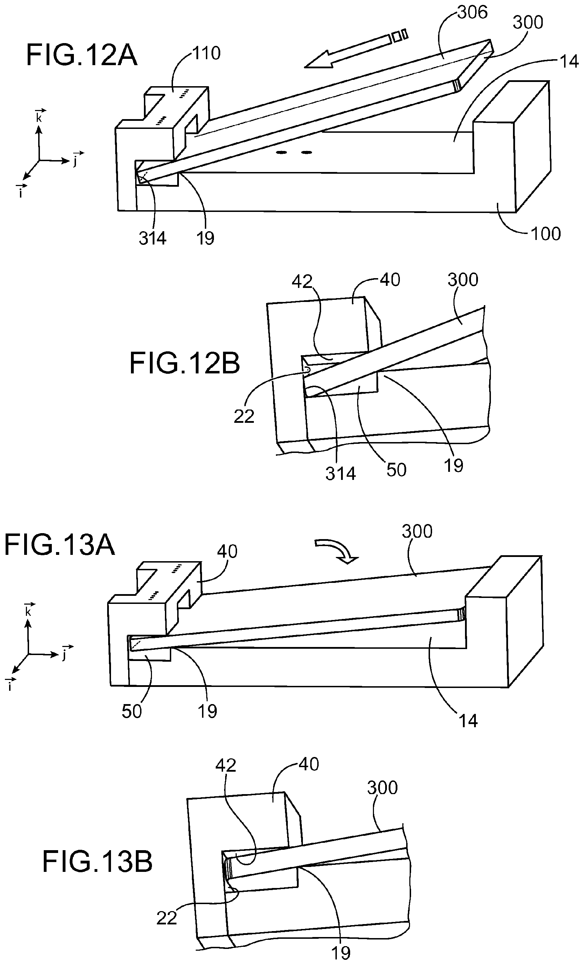

L'intersection entre la surface inclinée 18 et la première surface 14 forme une arête 19 contre laquelle une carte 300 peut être positionnée, cette dernière pouvant ensuite être pivotée en étant maintenue contre cette arête 19, afin que sa face d'appui 308 vienne, contre, ou à proximité de, la première surface 14 et que, de préférence simultanément, sa face de connexion 306 vienne contre, ou à proximité de, la deuxième surface 42 du dispositif. On réalise ainsi une connexion fluidique. Pour cette raison, l'arrête 19, qui fait partie ici de la première surface 14, ou est disposée sur cette première surface 14, peut aussi être appelée axe de rotation. Le positionnement en appui de la carte 300 sur l'arrête 19, puis sa rotation autour de cet axe de rotation sont illustrés en figure 12A - 13B.

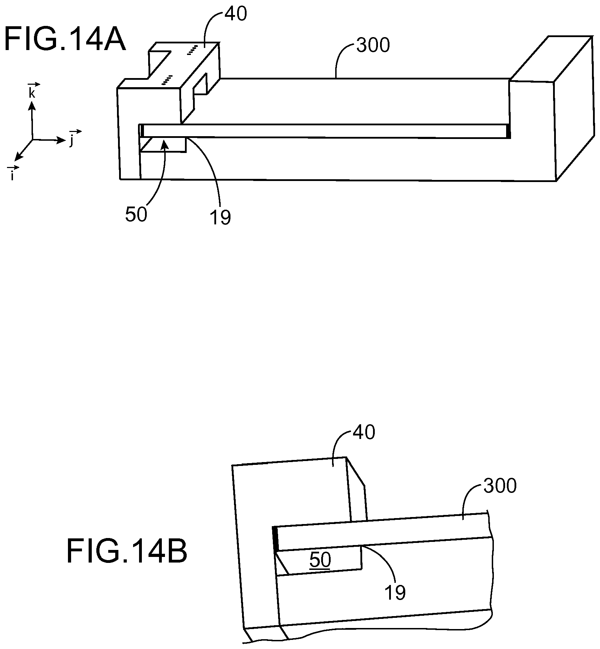

Comme on le voit en figures 3, 14A, 14B une carte 300 est connectée au dispositif lorsque sa face d'appui 308 est en contact avec la première surface 14 de la base 10 et au moins un canal fluidique 302 de la carte, présent sur la face de connexion 306 de ladite carte, est en connexion fluidique avec un canal fluidique 44 débouchant de la deuxième surface 42 de la paroi supérieure 40. La deuxième surface 42 est alors une surface d'appui pour la face de connexion 306 de la carte 300 lorsque celle-ci est connectée au dispositif.

Des moyens de maintien 60 (non représentés en figures 12A, 13A, 14A, mais visibles en figues 2 et 3), qui exercent une force sur la carte 300 lorsque celle-ci est connectée au dispositif, la maintiennent alors appuyée contre la première surface 14 du dispositif, ce qui, par effet de levier, permet un appui de la carte contre la deuxième surface 42 du dispositif.

De préférence, les moyens de maintien 60 exercent :
- une force perpendiculaire à la première surface 14 (c'est-à-dire selon la direction de l'axe *̅k̅*̅) et orientée vers la première surface 14, contre laquelle la carte est alors maintenue,
- et éventuellement, une force parallèle à la première surface 14 (c'est-à-dire selon la direction de l'axe *̅j̅*̅) vers la butée avant 22, contre laquelle la carte est alors également maintenue.

Ainsi, la carte 300 peut être plaquée contre la première surface 14 et, éventuellement, contre la butée avant 22, grâce aux moyens de maintien 60.

Il est également possible que le moyen de maintien 60 n'exerce qu'une force perpendiculaire à la première surface 14, orientée vers celle-ci.

La force appliquée par les moyens de maintien 60 est réversible, pour permettre le positionnement de la carte 300 sur la première surface 14, puis le retrait de cette même carte.

On comprend que plus l'axe 19 est proche de l'axe du canal 44 débouchant de la deuxième surface 42, plus l'effet de levier obtenu en agissant sur la partie arrière de la carte 300, c'est-à-dire la partie de la carte située à proximité de la paroi arrière 30 du dispositif, est important. Ainsi, d'une façon générale, afin de maximiser l'effet de levier, l'axe 19, sur lequel la carte 300 est appuyée pour ensuite pivoter, est placé à une distance relativement éloignée de la paroi arrière 30 du dispositif, et relativement proche d'au moins une embouchure d'un canal 44 débouchant de la deuxième surface 42 du dispositif. Par exemple, l'axe 19 est au moins deux fois plus proche de l'embouchure du canal 44 (ou d'un axe de ce canal dirigé selon la direction k) que de la paroi arrière 30. Cela permet d'appliquer, sur la carte 300, une force d'appui plus importante contre la deuxième surface 42. On obtient alors une connexion fluidique étanche. C'est notamment le cas lorsque, comme expliqué plus loin, au moins un joint 74 est disposé au niveau d'au moins une embouchure d'au moins un canal 44, 302 (figure 5B).

Les surfaces 16 (surface de fond), 18 (surface inclinée), 22 (butée avant) et 42 (deuxième surface) définissent un volume d'accueil, ou zone d'insertion 50 d'une partie d'une carte microfluidique, comme cela sera expliqué en détail plus loin. La deuxième surface 42 de la paroi 40 est en regard de la surface de fond 16 et séparée de celle-ci par une distance H centimétrique, pouvant être comprise entre quelques millimètres et plusieurs centimètres, par exemple entre 1 mm ou 5 mm et 5 cm ou 10 cm.

La base 10, la paroi avant 20, la paroi arrière 30 et la paroi supérieure 40 peuvent former une seule pièce réalisée dans un matériau de type rigide, comme par exemple du verre, du métal, ou un plastique.

Selon une réalisation particulière, la paroi arrière 30 est traversée selon l'axe *̅j̅*̅ par au moins un trou fileté dans lequel sont insérés des moyens de maintien 60 permettant de maintenir la carte en appui contre la première surface 14.

Les moyens de maintien 60 comportent, dans cet exemple, une butée à bille à ressort de forme cylindrique comportant un pas de vis sur sa surface extérieure, une bille sur une extrémité et une fente de vissage sur l'extrémité opposée. La fente de vissage permet de positionner la butée dans le trou pour que la bille puisse dépasser de la butée arrière 32 de façon à ce que la distance entre la butée avant 22 et l'extrémité de la bille la plus proche de cette surface soit inférieure, de préférence légèrement inférieure, à la longueur de la carte 300. La bille a un mouvement de translation selon l'axe cylindrique de la butée pour pouvoir se retirer partiellement ou complètement dans la paroi arrière 30 et permettre ainsi le positionnement de la face d'appui 308 de la carte microfluidique 300 contre la première surface 14 du dispositif. La bille exerce une force de maintien, sur la carte 300, de façon à la maintenir en appui contre la première surface 14.

Afin d'exercer, comme expliqué ci-dessus, une force selon l'axe k et selon l'axe j, l'axe de la butée à bille à ressort de forme cylindrique 60 est, de préférence, disposé à une distance de la première surface 14 comprise entre ε et ε + r, où :
- ε est l'épaisseur de la carte 300,
- r est le rayon de la bille.

Ainsi, la carte 300 est plaquée à la fois contre la butée avant 22 et contre la première surface 14, grâce au moyen de maintien 60.

Le mouvement de translation de la bille et la force de rappel exercée par le ressort sur la bille sont réversibles, pour permettre la connexion et la déconnexion de la carte du dispositif.

Comme on le comprend, au moins une embouchure 304 est amenée en connexion fluidique avec l'une au moins des embouchures 45, de façon à permettre la circulation de matière, sous forme de fluides, gazeux ou liquides, entre le dispositif de connexion selon l'invention et la carte microfluidique connectée au dispositif. Dans un mode de réalisation particulier, une ou plusieurs embouchures 45 peuvent être munies d'un joint 74 pour assurer ou renforcer l'étanchéité lors d'une connexion de la carte au dispositif. Plusieurs embouchures peuvent déboucher de la deuxième surface 42. Chaque embouchure 45 peut être de section différente, ou similaire ou identique à la section de l'une au moins des embouchures 304 présentes à la surface d'une carte microfluidique (figure 1).

On a déjà évoqué ci-dessus la possibilité d'utiliser des tubes 70 dans un ou plusieurs des canaux 44. Ces tubes peuvent être en matière plastique, de diamètre externe égal ou inférieur à la section interne des canaux 44, de manière à pouvoir y être insérés. Un ou plusieurs de ces tubes 70 peuvent être amovibles ou interchangeables. Ainsi, pour éliminer tout risque de contamination des parois des canaux et/ou des parois des tubes 70 par un fluide, on peut substituer des tubes ayant transporté de la matière par des tubes propres ou « vierges » ou ayant transporté la même matière. Chaque tube 70 peut avoir une section qui s'élargit à une de ses extrémités 72 de sorte que celle-ci ne puisse pas s'enfoncer dans les canaux 44, comme on le voit en figure 5B. Des joints 74, adaptés à la forme du tube peuvent être placés, de façon préférentielle, à l'embouchure des canaux 44 de façon à assurer une bonne étanchéité lorsqu'une carte microfluidique, de préférence de surface plane, est pressée contre la surface 42, comme cela est expliqué également dans le document EP 1 170 542.

En variante, le ou les tubes 70 placés dans le ou les canaux 44 peut avoir une extrémité qui dépasse de la surface 42 comme cela est expliqué également dans le document WO 02/070 942, figure 1. Lorsque la surface 306 de la carte 300 est recouverte d'un film de protection, on peut utiliser ce tube pour percer ce dernier lorsque la face de connexion 306 de la carte 300 est appuyée ou dirigée vers la surface 42 de la paroi supérieure 40.

La figure 6, sur laquelle on retrouve les mêmes éléments que sur les figures précédentes, représente une variante des dispositifs précédents, dans laquelle les parois avant 20, arrière 30, supérieure 40 sont démontables ou amovibles. Les parois et la base 10 du dispositif peuvent être choisies et adaptées en fonction de la carte 300 que l'on souhaite connecter. Par exemple, une paroi avant 20' de hauteur différente de la paroi avant 20, peut être substituée à cette dernière afin de faire varier la distance H et permettre ainsi la connexion de cartes 300 d'épaisseurs différentes. La base 10 peut également être changée de sorte que la distance D puisse être adaptée à des cartes 300 de longueurs différentes selon l'axe *̅j̅*̅. La paroi supérieure 40 peut être séparée de la paroi avant 20 et/ou la paroi avant 20 peut être séparée de la base 10 pour permettre une substitution plus aisée des tubes 70 dans les canaux 44 et/ou le nettoyage des canaux.

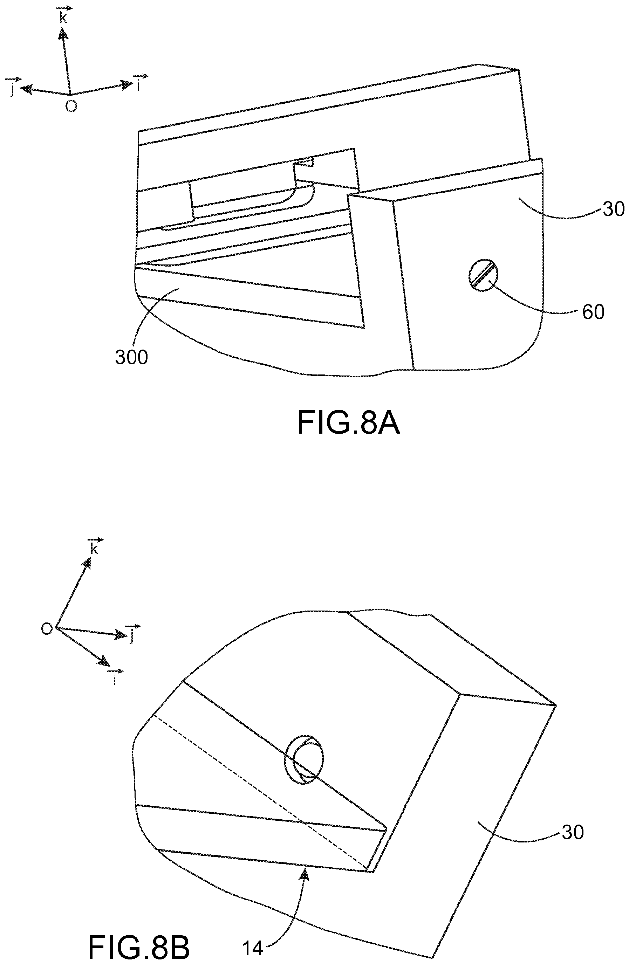

En variante encore, la base 10 et la paroi arrière 30 forment une pièce 100 monolithique, réalisée par exemple par usinage, comme on le voit en figure 7. Un ou plusieurs trous filetés 102, ici au nombre 4, traversant la paroi arrière 30, permettent de loger des butées à bille à ressort 60. Le logement de cette butée est représenté plus en détail en figures 8A et 8B. Un ou plusieurs trous filetés 106 (2 sur l'exemple de la figure 7), peuvent être réalisés sur la surface avant 104 de la base 100 pour permettre la fixation d'une pièce 110 dite pièce avant.

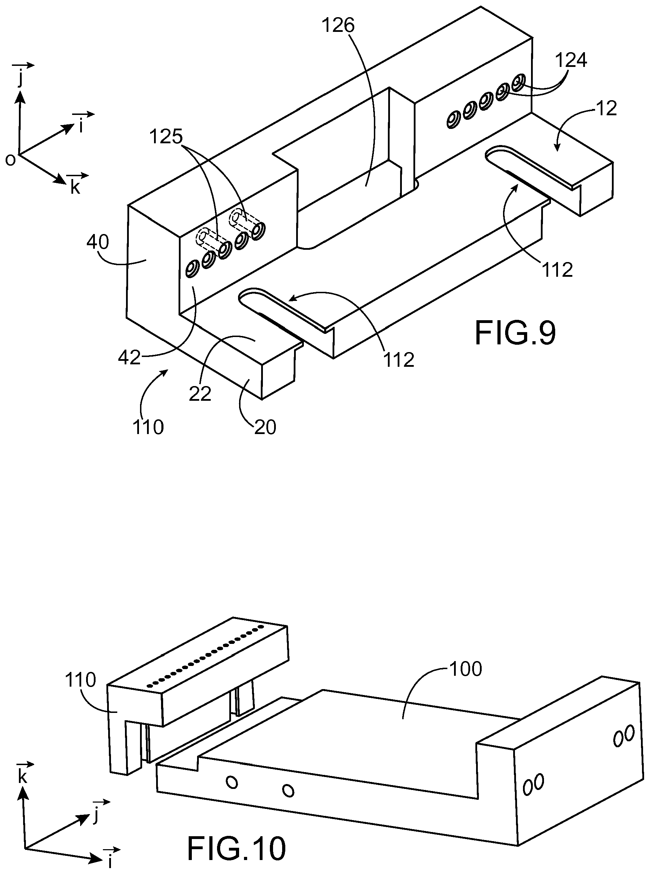

Celle-ci peut être monolithique, réalisée dans une même pièce par usinage et composée des parois 20 et 40 (figure 9). Deux tranchées, ou rainures, 112, parallèles entres elles, distinctes et perpendiculaires à la paroi 40, traversent la paroi 20 selon l'axe *̅j̅*̅. La section des tranchées selon l'axe *̅i̅*̅ est plus grande sur la surface opposée à la surface 22 afin de permettre le serrage de la pièce avant 110 contre la base 100 par pression de têtes de vis sur les parois des tranchées lors du vissage desdites vis dans les trous filetés 106. Les tranchées permettent un mouvement de translation, selon l'axe *̅k̅*̅, de la base 100 par rapport à la pièce avant 110, avant serrage, afin d'adapter, en fonction de l'épaisseur de la carte microfluidique, la distance séparant la surface de fond 16 et la deuxième surface 42. La base 100 et la pièce avant 110 sont assemblés selon la figure 10 afin d'obtenir un dispositif d'interconnexion selon l'invention. Autrement dit, le dispositif comporte ainsi des moyens d'ajustement 112 permettant d'adapter la distance entre la première surface 14 et la seconde surface 42, en fonction de l'épaisseur de la carte 300 à connecter. Dans cet exemple, les moyens d'ajustement prennent la forme de tranchées alésées 112 ménagées sur la pièce avant 110, coopérant avec des trous filetés 106 réalisées dans la base 100, permettant d'assembler la base 100 à la pièce avant 110 en ajustant la distance entre la deuxième surface 42 et la première surface 14.

D'autres moyens d'ajustement de la distance entre la deuxième surface 42 et la première surface 14 peuvent être prévus. Ainsi, lorsque la base 100 et la pièce avant 110 sont assemblées, ou ne forment qu'une seule pièce 10, un ressort, disposé dans la base (100, 10), peut agir sur la première surface 14, de façon à ajuster la distance entre cette surface et la deuxième surface 42.

La pièce avant 110 est traversée par des canaux 125 débouchant sur la deuxième surface 42.

Dans ce mode de réalisation, comme dans les autres décrits dans cette demande, la deuxième surface 42 peut comporter, outre des embouchures de canaux fluidiques, des moyens électriques, et/ou optiques et/ou thermiques, aptes à être placés en contact avec des moyens analogues disposés sur la carte microfluidique 300 lorsque cette dernière est connectée au dispositif, et cela quel que soit le mode de réalisation considéré. Par moyen optique, on entend par exemple une fibre optique, et/ou une fenêtre optique, et/ou un capteur optique, et/ou une source de lumière. Par moyen thermique, on entend par exemple un contact thermique. Par moyen électrique, on entend par exemple un contact électrique.

Par exemple, une ou plusieurs ouvertures 126 peuvent être réalisées dans la ou les pièces 20 et/ou 40, pour laisser passer au moins un élément tel qu'un câble ou un conduit, afin de le/les mettre en contact avec une des surfaces de la carte microfluidique 300. Par exemple, l'ouverture 126 pratiqué dans les parois 20 et 40 peut permettre le passage d'un ou de plusieurs câbles électriques et/ou une ou plusieurs fibres optiques, pour un ou des dispositifs de mesure par contact tel qu'une sonde de surface. Une ou plusieurs ouvertures 126 peut être également réalisé dans les modes de réalisation déjà exposés ci-dessus.

Dans les réalisations précédentes, l'angle α (voir figure 3) formé par la première surface 14 et la surface inclinée 18 est égal à 270°, ce qui définit une arête 19 formant un axe de rotation pour la carte. Mais, d'une manière plus générale, l'angle α formé par la première surface 14 et la surface inclinée 18 peut être supérieur à 180°, comprise entre 180° et 270°, par exemple égal à 225°. L'inclinaison de la surface inclinée 18 peut permettre une mise en place plus aisée de la carte dans la zone d'insertion 50, et un retrait plus facile de cette même carte de cette zone 50, cette surface inclinée 18 servant alors de guide ou de support à la carte 300 lors des étapes de sa connexion au dispositif ou de sa déconnexion du dispositif. La première surface 14 et la surface de fond 22 peuvent être reliées directement par une surface inclinée 18 ou par l'intermédiaire de plusieurs surfaces inclinées 18.

Des variantes des dispositifs précédents peuvent comporter un ou plusieurs moyens de maintien 60 disposés sur ou dans une ou plusieurs parois perpendiculaires à la première surface 14 du dispositif et en vis-à-vis d'une surface de la carte microfluidique 300.

En variante des réalisations présentées ci-dessus, les moyens de maintien 60 peuvent comporter un aimant pouvant produire une force à distance de type électromagnétique ou des moyens de type élastique pour l'application d'une force de contact sur une des faces de la carte 300. Ces moyens de type élastique sont par exemple en un matériau élastomère, fixé sur ou dans la surface d'une paroi. La carte microfluidique peut ainsi être maintenue en appui contre la première surface 14 par un ou plusieurs moyens de maintien 60 disposés sur une des parois du dispositif et en particulier sur ou à proximité de la paroi arrière 30. La carte peut être maintenue dans le plan [O;*̅i̅*̅;*̅j̅*̅] par un ou plusieurs moyens de maintien 60 positionnés sur au moins une des parois précédentes.

Selon une autre variante des dispositifs précédents, un ou des joints, assurant l'étanchéité entre les canaux 44, présents sur la deuxième surface 42, et les canaux 302, présents sur la face de connexion 306 de la carte microfluidique 300, peuvent être placés au niveau de cette face 306.

Quel que soit le mode de réalisation, un dispositif selon l'invention peut comporter des moyens de régulation thermique permettant de chauffer ou de refroidir la carte microfluidique en appui contre la première surface 14 du dispositif. La température à la surface et/ou dans la carte 300 peut ainsi être contrôlée, par exemple par un opérateur ou un automate. De tels moyens de régulation peuvent être placés près de la surface 14 dans la base 2. Ces moyens peuvent utiliser l'effet Peltier, et/ou comporter une ou plusieurs résistances électriques, et/ou une ou plusieurs sources de chaleur infrarouge ou tous autres moyens permettant de contrôler la température de la carte 300 localement ou globalement par contact ou non.

Dans un mode de réalisation particulier, la base 10, les parois 20, 30 et 40 peuvent être totalement ou partiellement transparentes et/ou comporter des ouvertures traversantes afin de permettre des analyses optiques ou autres de la carte 300 connectée au dispositif, par réflexion ou transmission de rayonnements électromagnétiques, dont les longueurs d'onde appartiennent de préférence au domaine du visible ou de l'infrarouge.

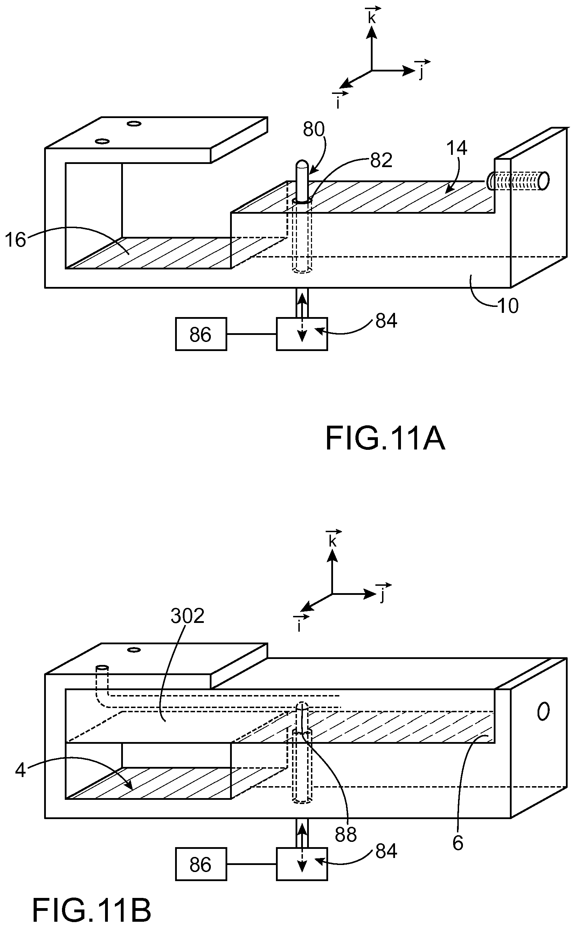

Selon un autre mode de réalisation, la première surface 14 et/ou la surface de fond 16 peuvent être traversées par un ou plusieurs plots mobiles 80 (figures 11A et 11B). Les moyens de déplacement 84 permettent au plot 80 d'avoir un mouvement de translation perpendiculaire à la première surface 14 et/ou à la surface de fond 16 de façon à exercer ou relâcher une pression localisée sur une surface souple du substrat 300. La déformation de la surface souple permet de rétrécir la section 88 du canal 302 présent dans ou à la surface de la carte, voire d'obstruer ce canal 302.

Le mouvement de translation est contrôlé par un opérateur et/ou des moyens tels qu'un automate en interaction avec l'interface 86.

Lorsque la carte 300 est connectée avec le dispositif selon l'invention, le ou les canaux 44 et le ou les canaux 302 peuvent transporter un fluide destiné à un traitement ou une analyse par des instruments de traitement ou d'analyse aptes à être raccordés au dispositif. Autrement dit, le dispositif d'interconnexion selon l'invention peut servir d'interface entre une carte fluidique 300 et un tel instrument.

Un procédé de connexion et de déconnexion d'une carte microfluidique 300 avec un dispositif d'interconnexion selon l'invention va maintenant être expliqué.

Pour connecter la carte dans un dispositif d'interconnexion selon l'invention, l'opérateur introduit l'extrémité de la carte 300 dans la zone d'insertion 50 précédemment définie, comme on le voit en figures 12A et 12B. La carte 300 est introduite dans cet espace selon un mouvement de translation de façon à ce que la face de connexion 306 soit en vis-à-vis avec la deuxième surface 42 de la paroi supérieure 40 et que la surface latérale 314 à l'extrémité 312, dite extrémité avant, de la carte soit en contact avec la surface 22 de la paroi 20. Autrement dit, la carte 300 est introduite dans la zone d'insertion 50 jusqu'à ce qu'elle soit en contact avec la butée avant 22 et qu'elle vienne en appui sur l'arrête 19.

L'opérateur accompagne le mouvement de basculement de la carte, en appui sur l'arête 19. Un mouvement de rotation est alors exercé, permettant à la carte 300 de pivoter autour de l'axe 19 (comme on voit en figures 13A et 13B) et de venir en appui contre la première surface 14, ce qui permet, par effet de levier autour de l'axe 19, d'appuyer la surface 306 de la carte 300 sur la deuxième surface 42. La carte est alors connectée au dispositif, elle peut alors être maintenue par les moyens de maintien 60 (non représentés en figures 12A - 14B), cette position est illustrée en figures 14A et 14B. Plus précisément, lorsque la carte 300 pivote autour de l'arête 19, la face d'appui 308 de la carte 300 vient s'appuyer contre la première surface 14 du dispositif et, par effet de levier, la face de connexion 306 de la carte 300 se rapproche et peut éventuellement s'appuyer contre la deuxième surface 42 du dispositif (figures 12B et 13B). Le ou les moyens de maintien 60 se déforment et/ou se déplacent de façon à permettre à la carte microfluidique d'avoir sa surface 308 maintenue en contact avec la première surface 14. Au moins une embouchure 304 du canal fluidique 302 de la carte 300 est alors alignée avec au moins une embouchure 45 d'un canal 44, présent sur la deuxième surface 42 de la paroi supérieure 40. Le mouvement de basculement conduit à une position dans laquelle est assurée l'étanchéité entre, éventuellement, les tubes 70 et/ou les canaux 44 et les embouchures 304. Si des joints sont présents, positionnés dans le prolongement, des canaux à la surface de connexion 306 et/ou à la surface 42, leur écrasement assure également cette étanchéité. En outre, les joints sont ainsi préservés de façon optimum car tout mouvement de cisaillement (dans un plan parallèle à [O;*̅i̅*̅;*̅j̅*̅]) sur ces joints est évité.

Le retrait du consommable ou de la carte microfluidique par l'opérateur s'effectue simplement en réalisant les gestes précédents dans l'ordre inverse.

Autrement dit, l'opérateur soulève la partie de la carte 300 opposée à l'extrémité avant 312 de façon à éloigner cette dernière de la surface 42 par un mouvement de rotation autour de l'axe 19. Le mouvement de rotation est effectué jusqu'à orienter la carte 300 selon un angle d'inclinaison permettant de la retirer du dispositif d'interconnexion par un simple mouvement de translation selon l'axe de la longueur de la carte 300 ou par un mouvement latéral selon l'axe *̅i̅*̅.

Dans cette description, la première surface 14 et la seconde surface 42 du dispositif étaient agencées comme représenté sur la figure 2. L'invention couvre un dispositif de géométrie analogue, selon lequel un canal fluidique 44 déboucherait de la surface 14, qui serait alors appelée deuxième surface, la surface 42 faisant alors office de première surface (autrement dit, on inverse alors le rôle des première et deuxième surface). Selon une telle configuration, la face d'appui 308 de la carte serait maintenue en appui vers la surface 42, afin que la face de connexion 306 soit en appui contre la première surface 14.

Un dispositif selon l'invention permet la connexion et la déconnexion rapide, fiable et répétitive d'une carte 300. Les étapes de connexion et de déconnexion de la carte peuvent être réalisées sans outil et sans connaissance technique particulière. Un dispositif de connexion selon l'invention offre de nouveaux avantages, comme par exemple :
- une fabrication simple et rapide,
- une utilisation simple et rapide,
- une utilisation dans des environnements variés,
- un entretien simple et économique.

## Revendications

1. Dispositif d'interconnexion d'une carte fluidique (300), la carte comportant au moins un premier canal fluidique (302), débouchant d'une face de connexion (306), cette dernière étant parallèle à une face d'appui (308), ledit dispositif d'interconnexion comportant :
• une première surface (14), destinée à recevoir la face d'appui (308) de la carte (300),
• une deuxième surface (42) de laquelle débouche un deuxième canal fluidique (44),
• des moyens (20, 30, 60) de maintien de la carte, destinés à maintenir la face de connexion (306) de la carte (300) en appui contre la deuxième surface (42) du dispositif, de telle sorte que le premier canal fluidique (302) soit en connexion fluidique avec le deuxième canal fluidique (44),
• un axe de rotation (19),
• **caractérisé en ce que** la carte (300) peut pivoter autour de l'axe de rotation (19) de telle sorte que sa face d'appui (308) vienne en appui contre la première surface (14) du dispositif, cet axe étant parallèle à la deuxième surface et à la première surface du dispositif, ces deux surfaces étant parallèles entre elles.

2. Dispositif selon la revendication précédente, les moyens (60) de maintien :
- étant aptes à maintenir la face d'appui (308) de la carte (300) contre la première surface (14) du dispositif, de telle sorte que la face de connexion (306) de la carte (300) soit maintenue en appui contre la deuxième surface (42) du dispositif ;
- et/ou peuvent exercer sur une carte, positionnée sur ladite première surface (14) dudit dispositif, au moins une force ayant une composante perpendiculaire à cette première surface (14), et, éventuellement, peuvent exercer sur la carte, positionnée sur ladite première surface (14) dudit dispositif, au moins une force ayant une composante parallèle à cette première surface (14) ;
- et/ou sont amovibles afin de permettre la connexion ou la déconnexion de la carte (300) au dispositif.

3. Dispositif d'interconnexion selon la revendication 1 ou 2, l'axe de rotation (19) étant une arête de ladite première surface (14), ou est disposé sur ladite première surface (14).

4. Dispositif d'interconnexion selon l'une des revendications précédentes, dans lequel au moins un tube (70) est disposé dans au moins un canal fluidique (44) du dispositif.

5. Dispositif d'interconnexion selon l'une des revendications précédentes, dans lequel au moins un joint (74) est placé à l'embouchure (45) d'au moins un canal fluidique (44) pour permettre la circulation d'au moins un fluide, sans perdre de la matière, entre un premier canal fluidique (302) de la carte (300) et le canal fluidique (44) du dispositif.

6. Dispositif d'interconnexion selon l'une des revendications précédentes, comportant au moins deux parties (10, 20, 30, 40) démontables et/ou dont les positions relatives sont variables, par exemple dans lequel la position relative de la première surface (14) et de la deuxième surface (42) du dispositif est variables.

7. Dispositif d'interconnexion selon l'une des revendications précédentes, dans lequel :
- la deuxième surface (42) ne surplombe pas la première surface (14) ;
- et/ou une surface de fond (16) est parallèle à la première surface (14) et est surplombée par la deuxième surface (42).

8. Dispositif d'interconnexion selon la revendication précédente, dans lequel une surface de fond (16) est parallèle à la première surface (14) et est surplombée par la deuxième surface (42), et dans lequel:
- une paroi avant (20) et une paroi arrière (30) sont jointes au dispositif et séparées par une distance D selon une extension longitudinale suivant un axe (Oj), la surface de fond (16) ayant, suivant le même axe (Oj), une extension longitudinale d comprise entre D/2 et D/20 ;
- et/ou les extrémités les plus proches de la première surface (14) et de la deuxième surface (42) sont séparées d'une distance égale ou supérieure à 1,1 ou 1,2 fois l'épaisseur d'une carte (300).

9. Dispositif d'interconnexion selon l'une des revendications précédentes, comportant en outre des moyens de connexion électrique et/ou optique entre la carte et le dispositif et/ou de régulation thermique de la carte.

10. Dispositif d'interconnexion selon l'une des revendications précédentes, comportant au moins une surface et/ou une paroi totalement ou partiellement transparente à un rayonnement électromagnétique.

11. Dispositif d'interconnexion selon l'une des revendications précédentes, dans lequel des moyens forment au moins un plot (80), mobile suivant une direction sensiblement perpendiculaire à la première surface (14), pouvant exercer une pression sur la face d'appui (308) d'une carte (300) connectée à un dispositif selon l'invention.

12. Procédé de connexion d'une carte (300) comportant au moins un premier canal fluidique (302) et une face de connexion (306) parallèle à une face d'appui (308), le canal fluidique (302) ayant au moins une embouchure (304) sur ladite face de connexion (306), ce procédé mettant en oeuvre un dispositif selon l'une des revendications 1 à 11, procédé dans lequel :
- la carte (300) est insérée dans le dispositif d'interconnexion de sorte que sa face d'appui (308) de la carte soit amenée vers la première surface (14) du dispositif et que sa face de connexion (306) soit en appui contre la deuxième surface (42) du dispositif,
- la carte (300) est maintenue dans le dispositif d'interconnexion par les moyens de maintien (60) .

13. Procédé selon la revendication précédente, dans lequel :
- la carte (300) est insérée dans le dispositif, de sorte que la face de connexion (306) de la carte (300) soit sensiblement en vis-à-vis de la deuxième surface (42), et la face d'appui (308) de la carte (300) soit en contact avec l'axe (19) et sensiblement en vis-à-vis au moins de la première surface (14) du dispositif,
- la carte (300) est ensuite pivotée autour dudit axe (19), jusqu'à ce que la face de connexion (306) de la carte (300) soit en appui contre la deuxième surface (42) et la face d'appui (308) soit en contact avec la première surface (14) du dispositif, cet axe de rotation (19) étant, par exemple, une arête de ladite première surface (14) ou disposé sur ladite première surface (14).

14. Procédé de déconnexion de la carte (300) avec un dispositif selon l'invention, dans lequel les étapes d'au moins l'une des revendications 12 ou 13 sont reproduites dans l'ordre inverse.

15. Procédé selon l'une des revendications 12 à 14, comportant une étape de déformation des moyens de maintien (60) pour permettre la connexion ou bien la déconnexion de la carte (300).

## Patentansprüche

1. Verbindungsvorrichtung einer fluidischen Karte (300), wobei die Karte mindestens einen ersten Fluidkanal (302) aufweist, der auf einer Anschlussfläche (306) mündet, wobei letztere parallel zu einer Auflagefläche (308) ist, und die Verbindungsvorrichtung aufweist:
eine erste Fläche (14), die dazu bestimmt ist, die Auflagefläche (308) der Karte (300) aufzunehmen,
eine zweite Fläche (42), auf welcher ein zweiter Fluidkanal (44) mündet,
Einrichtungen (20, 30, 60) zum Halten der Karte, die dazu bestimmt sind, die Anschlussfläche (306) der Karte (300) in Anlage gegen die zweite Fläche (42) der Vorrichtung zu halten, derart, dass der erste Fluidkanal (302) sich in fluidischer Verbindung mit dem zweiten Fluidkanal (44) befindet,
eine Drehachse (19),
**dadurch gekennzeichnet, dass** die Karte (300) um die Drehachse (19) schwenken kann, derart, dass ihre Auflagefläche (308) in Anlage gegen die erste Fläche (14) der Vorrichtung kommt, wobei diese Achse parallel zur zweiten Fläche und zur ersten Fläche der Vorrichtung ist, wobei diese beiden Flächen zueinander parallel sind.

2. Vorrichtung nach dem vorhergehenden Anspruch, wobei die Halteeinrichtungen (60):
ausgebildet sind, die Auflagefläche (308) der Karte (300) gegen die erste Fläche (14) der Vorrichtung zu halten, derart, dass die Anschlussfläche (306) der Karte (300) in Anlage gegen die zweite Fläche (42) der Vorrichtung gehalten wird;
und/oder auf eine Karte, die auf der ersten Fläche (14) der Vorrichtung positioniert ist, mindestens eine Kraft ausüben können, die eine senkrecht zur ersten Fläche (14) wirkende Komponente hat, und eventuell auf die Karte, die auf der ersten Fläche (14) der Vorrichtung positioniert ist, mindestens eine Kraft ausüben können, die eine parallel zur ersten Fläche (14) wirkende Komponente hat;
und/oder entfernbar sind, um das Anschließen oder das Trennen der Karte (300) von der Vorrichtung zu ermöglichen.

3. Verbindungsvorrichtung nach Anspruch 1 oder 2, wobei die Rotationsachse (19) eine Kante der ersten Fläche (14) ist, oder auf der ersten Fläche (14) angeordnet ist.

4. Verbindungsvorrichtung nach einem der vorhergehenden Ansprüche, wobei mindestens eine Röhre (70) in mindestens einem Fluidkanal (44) der Vorrichtung angeordnet ist.

5. Verbindungsvorrichtung nach einem der vorhergehenden Ansprüche, wobei mindestens eine Dichtung (74) an der Mündung (45) mindestens eines Fluidkanals (44) angeordnet ist, um das Zirkulieren mindestens eines Fluides ohne Materialverlust zwischen einem ersten Fluidkanal (302) der Karte (300) und dem Fluidkanal (44) der Vorrichtung zu ermöglichen.

6. Verbindungsvorrichtung nach einem der vorhergehenden Ansprüche, die mindestens zwei Teile (10, 20, 30, 40) aufweist, die demontierbar sind und/oder deren relative Positionen veränderbar sind, wobei beispielsweise die relative Position der ersten Fläche (14) und der zweiten Fläche (42) der Vorrichtung veränderbar ist.

7. Verbindungsvorrichtung nach einem der vorhergehenden Ansprüche, wobei:
die zweite Fläche (42) die erste Fläche (14) nicht überragt;
und/oder eine Bodenfläche (16) parallel zur ersten Fläche (14) ist und von der zweiten Fläche (42) überragt wird.

8. Verbindungsvorrichtung nach dem vorhergehenden Anspruch, wobei eine Bodenfläche (16) parallel zur ersten Fläche (14) ist und von der zweiten Fläche (42) überragt wird, und wobei:
eine vordere Wand (20) und eine hintere Wand (30) mit der Vorrichtung verbunden sind und durch einen Abstand D gemäß einer Längsausdehnung entlang einer Achse (Oj) getrennt sind, wobei die Bodenfläche (16) entlang derselben Achse (Oj) eine Längsausdehnung d zwischen D/2 und D/20 aufweist;
und/oder die am nächsten zueinander befindlichen Enden der ersten Fläche (14) und der zweiten Fläche (42) um einen Abstand voneinander getrennt sind, der gleich groß oder größer als das 1,1- oder 2-fache der Dicke einer Karte (300) ist.

9. Verbindungsvorrichtung nach einem der vorhergehenden Ansprüche, die weiter Einrichtungen zur elektrischen und/optischen Verbindung zwischen der Karte und der Vorrichtung und/oder zur Wärmeregelung der Karte aufweist.

10. Verbindungsvorrichtung nach einem der vorhergehenden Ansprüche, die mindestens eine Fläche und/oder eine Wand aufweist, die für eine elektromagnetische Strahlung vollständig oder teilweise transparent ist.

11. Verbindungsvorrichtung nach einem der vorhergehenden Ansprüche, wobei die Einrichtungen mindestens einen Stift (80) bilden, der entlang einer Richtung im Wesentlichen senkrecht zur ersten Fläche (14) beweglich ist, und der einen Druck auf die Auflagefläche (308) einer Karte (300) ausüben kann, die an eine Vorrichtung gemäß der Erfindung angeschlossen ist.

12. Verfahren zum Anschließen einer Karte (300), die mindestens einen ersten Fluidkanal (302) und eine zu einer Auflagefläche (308) parallele Anschlussfläche (306) aufweist, wobei der Fluidkanal (302) mindestens eine Mündung (304) auf der Anschlussfläche (306) aufweist, wobei bei dem Verfahren eine Vorrichtung nach einem der Ansprüche 1 bis 11 zum Einsatz kommt, wobei bei dem Verfahren:
die Karte (300) in die Verbindungsvorrichtung eingesetzt wird, derart, dass die Auflagefläche (308) der Karte hin zur ersten Fläche (14) der Vorrichtung gebracht wird und ihre Anschlussfläche (306) sich in Anlage gegen die zweite Fläche (42) der Vorrichtung befindet,
die Karte (300) in der Verbindungsvorrichtung durch Halteeinrichtungen (60) gehalten wird.

13. Verfahren nach dem vorhergehenden Anspruch, wobei:
die Karte (300) in die Vorrichtung eingesetzt wird, so dass die Anschlussfläche (306) der Karte (300) sich im Wesentlichen gegenüberliegend der zweiten Fläche (42) befindet, und die Auflagefläche (308) der Karte (300) sich in Kontakt mit der Achse (19) und im Wesentlichen gegenüberliegend zumindest der ersten Fläche (14) der Vorrichtung befindet,
die Karte (300) dann um die Achse (19) geschwenkt wird, bis die Anschlussfläche (306) der Karte (300) sich in Anlage gegen die zweite Fläche (42) befindet und die Auflagefläche (308) sich in Kontakt mit der ersten Fläche (14) der Vorrichtung befindet, wobei die Drehachse (19) beispielsweise eine Kante der ersten Fläche (14) ist oder auf der ersten Fläche (14) angeordnet ist.

14. Verfahren zum Trennen der Karte (300) von einer Vorrichtung gemäß der Erfindung, wobei die Schritte mindestens eines der Ansprüche 12 oder 13 in umgekehrter Reihenfolge erneut ausgeführt werden.

15. Verfahren nach einem der Ansprüche 12 bis 14, aufweisend einen Schritt zur Verformung der Halteeinrichtungen (60), um das Anschließen oder auch das Trennen der Karte (300) zu ermöglichen.

## Claims

1. An interconnection device of a fluidic card (300), the card including at least one first fluid channel (302), emerging from a connection side (306), where this side is parallel to a support side (308), and where the said interconnection device includes:
• a first surface (14), for receiving the support side (308) of the card (300),
• a second surface (42) from which at least one second fluid channel (44) emerges,
• means (20, 30, 60) to hold the card in place, for holding the connection side (306) of the card (300) pressed against the second surface (42) of the device, such that the first fluid channel (302) is in fluid connection with the second fluid channel (44),
• an axis of rotation (19),
**characterized in that** the card (300) can pivot around the axis (19) such that its support side (308) is pressed against the first surface (14) of the device, this axis being parallel to the second surface and to the first surface of the device, both surfaces being parallel with each other.

2. A device according to the previous claim, where the holding means (60):
- are able to hold the support side (308) of the card (300) against the device's first surface (14), such that the connection side (306) of the card (300) is held pressed against the second surface of the device;
- and/or can exert on a card, positioned on the said first surface (14) of the said device, at least one force having a component perpendicular to this first surface (14) of said device and, possibly, can exert on the card, positioned on the said first surface (14) of the said device, at least one force having a component parallel to this first surface (14);
- and/or are detachable, in order to allow the card (300) to be connected to, or disconnected from, the device.

3. An interconnection device according to claim 1 or 2, where the axis of rotation (19) is a ridge of the said first surface (14), or is positioned on the said first surface (14).

4. An interconnection device according to one of the previous claims, in which at least one tube (70) is positioned in at least one fluid channel (44) of the device.

5. An interconnection device according to one of the previous claims, in which at least one seal (74) is positioned in the opening (45) of at least one fluid channel (44) to allow at least one fluid to flow, without losing material, between a first fluid channel (302) of the card (300) and the fluid channel (44) of the device.

6. An interconnection device according to one of the previous claims, including at least two portions (10, 20, 30, 40) which can be disassembled, and/or the relative positions of which may be varied, for example wherein the relative position of the first surface (14) and of the second surface (42) of the device may be varied.

7. An interconnection device according to one of the previous claims, in which:
- the second surface (42) does not overhang the first surface (14);
- and/or a bottom surface (16) is parallel to the first surface (14) and is overhung by the second surface (42) .

8. An interconnection device according to the previous claim, wherein a bottom surface (16) is parallel to the first surface (14) and is overhung by the second surface (42) and in which:
- a front wall (20) and a rear wall (30) are attached to the device and separated by a distance D according to a lengthways extension along an axis (Oj), where the bottom surface (16) has, in the same axis (Oj), a lengthways extension d of between D/2 and D/20;
- and/or in which the closest ends of the first surface (14) and of the second surface (42) are separated by a distance equal to or greater than 1.1 or 1.2 times the thickness of a card (300).

9. An interconnection device according to one of the previous claims, also including electrical and/or optical means of connection between the card and the device, and/or means of thermal regulation of the card.

10. An interconnection device according to one of the previous claims, including at least one surface and/or one wall which is totally or partially transparent to an electromagnetic radiation.

11. A device according to one of the previous claims, comprising at least one pin (80), which can move in a direction roughly perpendicular to the first surface (14), and which can exert a pressure on the support side (308) of the card (300) connected to a device according to the invention.

12. A method for connecting a card (300) including at least one first fluid channel (302) and a connection side (306) parallel to a support side (308), where the fluid channel (302) has at least one opening (304) on the said connection side (306), and where this method uses a device according to one of claims 1 to 11, a method in which:
- the card (300) is inserted in the interconnection device such that its support side (308) is brought towards the first surface (14) of the device and that its connection side (306) is pressing against the second surface (42) of the device,
- the card (300) is held in the interconnection device by the holding means (60).

13. A method according to the previous claim, in which
- the card (300) is inserted in the device, such that the connection side (306) of the card (300) is roughly facing the second surface (42), and the support side (308) of the card (300) is in contact with the axis (19) and roughly facing at least the first surface (14) of the device,
- the card (300) is then pivoted around the said axis (19), until the connection side (306) of the card (300) is pressed against the second surface (42) and the support side (308) is in contact with the first surface (14) of the device, this axis of rotation (19) being, for example, a ridge of the first surface (14), or is positioned on the first surface (14).

14. A method for disconnecting a card (300) from a device according to the invention, wherein the steps of at least one of claims 12 or 13 are accomplished in reverse order.

15. A method according to one of claims 12 to 14, including a step of deformation of the holding means (60) to allow connection, or alternatively disconnection, of the card (300).
